**Europäisches Patentamt**

**European Patent Office**

**Office européen des brevets**

(11) Veröffentlichungsnummer: **0 090 985**
**B1**

(12) # EUROPÄISCHE PATENTSCHRIFT

(45) Veröffentlichungstag der Patentschrift:
06.08.86

(21) Anmeldenummer: 83102689.3

(22) Anmeldetag: 18.03.83

(51) Int. Cl.⁴: **B 65 G 45/00**

(54) Abstreifvorrichtung für Gurtbänder.

(30) Priorität: 30.03.82 DE 3211626

(43) Veröffentlichungstag der Anmeldung:
12.10.83 Patentblatt 83/41

(45) Bekanntmachung des Hinweises auf die Patenterteilung:
06.08.86 Patentblatt 86/32

(84) Benannte Vertragsstaaten:
AT BE CH DE FR GB IT LI NL SE

(56) Entgegenhaltungen:
DD - A - 58 900
DE - A - 2 709 714
DE - B - 2 202 543
US - A - 3 674 131
US - A - 4 053 045
US - A - 4 359 150

(73) Patentinhaber: **Hosch Fördertechnik GmbH,
Königswall 16 - 18, D-4350 Recklinghausen (DE)**

(72) Erfinder: **Zhang, Jiashan, Dr.-Ing., Qinghuadonglu
Institut für Fördertechnik, Beijing (CN)**

(74) Vertreter: **Patentanwälte Wenzel & Kalkoff,
Ruhrstrasse 26 Postfach 2448, D-5810 Witten (DE)**

## Beschreibung

Die Erfindung betrifft eine Abstreifvorrichtung für Gurtbänder, die aus mehreren, jeweils eine Lamelle, mindestens eine Stütze sowie ein Federgelenk beinhaltenden Elementen bestehen, die an einer quer zum Gurtband verlaufenden Traverse mit Hilfe eines Elementenhalters befestigt sind. Eine derartige Abstreifvorrichtung ist schon aus den US-A-3 674 131 bekannt. Derartige Abstreifvorrichtungen sind seit langem bekannt. Sie dienen dazu, Gurtbänder von Transportvorrichtungen zu reinigen, also von an der Gurtbandoberfläche anhaftendem Gut zu befreien. Dabei kommt es auf eine gute Reinigungswirkung und auf die Fähigkeit der einzelnen Lamellen an, bei Auftreten eines Hindernisses, das sich von dem Gurtband gar nicht oder nur schlecht trennen lässt, elastisch auszuweichen und in möglichst kurzer Zeit wieder die Reinigungsposition zu erreichen.

Naturgemäss unterliegen die Abstreiflamellen einem gewissen Verschleiss, der bei stark abrasivem Fördergut auch relativ rasch voranschreiten kann. Aus diesem Grunde und infolge einer möglicherweise angehakten und damit nicht mehr justierten Lamelle ist in bestimmten Abständen eine Justierung der Lamellen erforderlich. Das geschieht durch Lösen einer Spannschraube, die die Lamelle mit der Stütze verbindet, wobei innerhalb der Lamelle ein Langloch angeordnet ist. Es hat sich gezeigt, dass die Einstellung der Lamellen zu der Gurtband-Unterseite äusserst genau erfolgen muss, insbesondere muss die Parallelität der Abstreifkante der Lamelle zu der Gurtband-Unterseite gewährleistet sein.

Die Grundeinstellung bzw. Nachstellung der Lamellen bereitet bisher grosse Schwierigkeiten. Das liegt einmal daran, dass beim Festziehen der Klemmschraube die aufgefundene einjustierende Stellung wieder verloren geht, zum anderen ist wegen der gefederten Lagerung der Stütze das Festziehen der Klemmschraube generell schwierig, da die Stütze der Schlüsselbewegung ausweicht. Schliesslich ist die Klemmschraube relativ schwer zugänglich, da sie in Richtung auf die Gurtband-Unterseite weist; ausserdem liegt sie in der Nähe des abgekratzten Gutstromes, so dass eine Nachstellung bei laufendem Gurt besonders unangenehm ist.

Bei einer bekannten Abstreifvorrichtung der eingangs genannten Art (US-PS 3 674 131) ist jedes Element mittels einer Schelle auf der Traverse befestigt, indem eine Kernhülse einer das Federgelenk bildenden Gummitorsionsfeder in einem gabelförmigen Bügel gelagert ist, der in eine die rohrförmige Traverse umgreifende Schelle übergeht. Wenn der Anstellwinkel der an relativ langen Stützen angebrachten Lamellen gegenüber dem Gurtband keine grosse Rolle spielt, lässt sich der durch das Federgelenk bewirkte Andruck der Lamellen an dem Gurtband durch eine entsprechende Verdrehung der Schelle auf der rohrförmigen Traverse verstärken. Eine Justierung der parallelen Lage jeder einzelnen Lamelle gegenüber dem Gurtband kann in ähnlicher Weise, die vorstehend zum Stand der Technik dargelegt ist, vorgenommen werden, nämlich unmittelbar an der Schraubbefestigung der Lamelle an der Stütze.

Bei einer anderen bekannten Abstreifvorrichtung (US-PS 4 359 150, die am 16-11-1982 veröffentlicht wurde) ist ebenfalls eine relativ lange Stütze, die an ihrem freien Ende die Lamelle trägt, mit ihrem anderen Ende unmittelbar über eine Gummitorsionsfeder an einer rohrförmigen Traverse befestigt, allerdings ohne Möglichkeit einer Winkelverstellung der Befestigung gegenüber der Traverse. Statt dessen lässt die Lamellenbefestigung zu, das die Lamelle sich innerhalb eines begrenzten Winkelbereichs gegenüber der Stütze verdrehen kann, wenn sich die Lage der Gurtbandfläche, mit der die Lamelle in Eingriff steht, ändert und dadurch entsprechende Verstellkräfte auf die Abstreifkante der Lamelle wirksam werden. Hierfür wird keine federnde Verstellung gewählt, sondern man ist bemüht, der Schraubbefestigung der Lamelle an der Stütze einen bestimmten Reibwert zu erteilen, bei dessen Überschreiten durch auf die Lamelle wirksame Gurtkräfte eine entsprechende Verstellung der Lamelle erfolgt. Eine Rückstellung der Lamelle in die Ausgangslage oder in jede andere Lage soll wiederum ausschliesslich durch Gurtkräfte bewirkt werden.

Es ist demnach Aufgabe der Erfindung, eine Abstreifvorrichtung der eingangs genannten Art zu schaffen, bei der die Nachstellung der Lamellen stark vereinfacht ist und auch bei laufendem Gurt relativ problemlos vorgenommen werden kann.

Zur Lösung dieser Aufgabe schlägt die Erfindung vor, dass die Befestigung des Elementenhalters an der Traverse durch eine lösbare Klemmverbindung erfolgt, die eine stufenlose Einstellung um eine Achse zulässt, die in Gurtbandlängsrichtung verläuft.

Die Erfindung schlägt also vor, an den Elementen und ihren Elementenhaltern im Normalfall keine Einstellungsmöglichkeit vorzusehen und die eigentliche Justierung an der Verbindung des Elementenhalters mit der Traverse vorzunehmen. Zum einen liegt die Justierstelle dann ausserhalb des abgekratzten Gutstromes, zum anderen ist sie relativ leicht zugänglich, ausserdem kann an dieser Stelle z. B. eine Klemmverbindung mit Hilfe eines zylindrischen Stabes und einer Schelle vorgesehen sein, die besonders feinfühlig und ohne die Gefahr des Verstellens beim Anspannen justierbar ist.

In der geschilderten Weise wird die Parallelität der Abstreifkante jeder Lamelle mit der Gurtband-Unterseite eingestellt bzw. aufrechterhalten. Darüberhinaus muss die Vorspannung jedes Elementes gegenüber der Gurtband-Unterseite eingestellt werden, was durch Annäherung der Traverse an die Gurtband-Unterseite erfolgen kann oder durch eine Aufwärtsschwenkbewegung des Elementenhalters und damit jedes Elementes. Es empfiehlt sich dann, die Klemmverbindung zwischen jedem Elementhalter und der Traverse mit Hilfe einer Doppelschelle zu bewirken, deren eine Schlinge den Elementenhalter und deren andere Schlinge die als zylindrisches Rohr ausgebildete Traverse umfasst. In diesem Fall kann jede Einstellung, also die Justierung der Parallelität sowie der Vorspannung individuell für jedes Element vorgenommen werden.

Eine wichtige Weiterbildung der Erfindung besteht darin, dass die Klemmverbindung zwischen jedem Elementenhalter und der Traverse bezüglich einer hin- und hergehenden Drehbewegung um die vorangehend genannte Achse elastisch ausgeführt ist, beispielsweise mit Hilfe einer sogenannten Silent-Buchse. Diese Anordnung gestattet eine selbsttätige Einstellung der Lamelle bezüglich der Parallelität zu der Gurtband-Unterseite, wenn sich das Gurtband verlagert, beispielsweise über seine gesamte Umlauflänge nicht in sich eben ist, sondern Beulen oder Verwerfungen trägt. Die Einstellung wird dann so getroffen, dass in der Grundstellung, die durch die Zentrierfeder vorgegeben ist, weitgehend eine Parallelität zu der Gurtband-Unterseite vorhanden ist, und nur die zu erwartenden Unregelmässigkeiten aus einer Veränderung der Gurtband-Unterseite durch die federnde Befestigung kompensiert wird. Es ist vorteilhaft, wenn als Zentrierfeder eine Torsionsfeder mit einer äusseren und einer inneren Hülse und einen dazwischen angeordneten Gummischicht vorgesehen ist, und dass die eine Hülse der Traverse und die andere Hülse dem Elementenhalter zugeordnet ist. Zur Vermeidung von einer übermässigen Verschmutzung der erfindungsgemässen Abstreifvorrichtung ist es zweckmässig, jede Lamelle an zwei Stützen zu führen und die eigentliche Abstreifkante der Lamelle schmaler auszuführen als den Abstand zwischen den beiden Stützen ein und derselben Lamelle. In dieser Weise fällt das abgekratzte Gut zwischen die Stützen und kann sich auf den Vorrichtungteilen nicht aufbauen. Unterstützend in dieser Richtung wirkt auch eine Wegverlegung der Abstreifstelle von der Drehachse innerhalb des Federgelenkes an jedem Element in der Weise, dass das abgekratzte Gut durch einen Freiraum innerhalb der Vorrichtung in einen darunter bereitgestellten Behälter fällt.

Nachfolgend werden Ausführungsbeispiele der Erfindung, die in der Zeichnung dargestellt sind, näher erläutert; darin bedeuten:

Fig. 1 eine Seitenansicht einer erfindungsgemässen Abstreifvorrichtung in einem ersten Ausführungsbeispiel,
Fig. 2 eine Frontansicht der Vorrichtung gemäss der Fig. 1 als Ausschnitt,
Fig. 3 eine Ansicht auf die Unterseite eines Gurtbandes mit einer darunterliegenden erfindungsgemässen Abstreifvorrichtung,
Fig. 4 eine Ansicht gemäss Fig. 1 eines weiteren Ausführungsbeispiels,
Fig. 5 eine Ansicht gemäss Fig. 2 dieses Ausführungsbeispiels,

Fig. 6 eine Ansicht gemäss Fig. 3 dieses Ausführungsbeispiels,
Fig. 7 eine Ansicht gemäss Fig. 1 eines dritten Ausführungsbeispiels der erfindungsgemässen Abstreifvorrichtung,
Fig. 8 eine Ansicht gemäss Fig. 2 dieses dritten Ausführungsbeispiels und
Fig. 9 eine Ansicht gemäss Fig. 3 dieses dritten Ausführungsbeispiels.

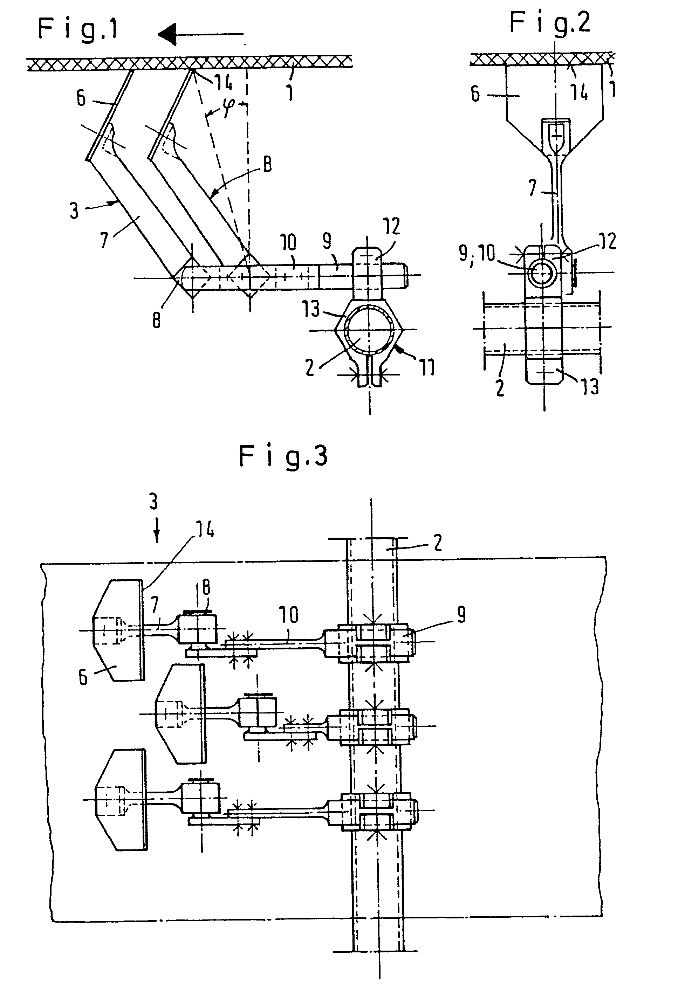

Ein erstes Ausführungsbeispiel der Erfindung ist in der Fig. 1 dargestellt. Unterhalb eines Gurtbandes 1 ist eine Traverse 2 in Form eines zylindrischen Rohres angebracht – die Halterung ist nicht dargestellt – an der mehrere Elemente 3 befestigt sind. Jedes Element 3 besteht aus einer Lamelle 6, einer Stütze 7 sowie einem Federgelenk 8, das als Gummitorsionsfeder ausgebildet ist. Während der eine Teil des Federgelenks 8 der Stütze 7 zugeordnet ist, ist der andere Teil einem Elementenhalter 10 zugeordnet, der an dem der Traverse 2 zugeordneten Ende als zylindrischer Stab 9 ausgebildet ist.

Die aus den Elementen 3 und dem Elementenhalter 10 gebildete Einheit ist mit dem zylindrischen Stab 9 voran in die kleine Schlinge 12 einer Doppelschelle 11 eingesteckt, wobei die grössere Schlinge 13 der Doppelschelle 11 die Traverse 2 umschlingt. Die Länge der Elementenhalter 10 variiert von Element 3 zu Element 3 (Fig. 3), so dass eine Staffelung der Lamellen 6 eintritt, und so die gesamte Gurtbreite abgekratzt wird.

Mit Hilfe der in den Fig. 1–3 dargestellten Anordnung lässt sich jede Lamelle 6 exakt in die vorgesehene Betriebsstellung einjustieren. Zunächst wird die Vorspannung der Anlagekraft jeder Lamelle an das Gurtband 1 festgelegt. Dazu wird entweder die Traverse 2 auf und ab verstellt oder durch Lösen und Festklemmen der grossen Schlinge 13 der Doppelschelle 11 wird die Winkelstellung des Elementenhalters 10 gegenüber dem Gurtband 1 verändert bzw. der Abstand jedes Federgelenkes 8 von der Unterseite des Gurtbandes 1 variiert. Dabei wird das Federgelenk 8 verschieden stark ausgelenkt, wodurch letztlich die Vorspannung erreicht wird.

Es ist zweckmässig, eine Einstellung vorzunehmen, bei der eine Abstreifkante 14 an jeder Lamelle 6 in Laufrichtung des Gurtbandes 1 vor dem Fusspunkt des von dem Federgelenk 8 auf die Unterseite des Gurtbandes 1 gefällten Lotes liegt bzw. dieses Lot mit der Verbindungslinie von dem Federgelenk zu der Abstreifkante 14 einen Winkel bildet, der 5–45° betragen kann, vorzugsweise jedoch ca. 20° betragen sollte. Dadurch wird erreicht, dass das von dem Gurtband 1 abgekratzte Gut nicht auf das Federgelenk 8, sondern in den Freiraum dahinter fällt, der lediglich durch die Stützen 7 durchkreuzt wird.

Nach der Einstellung der Vorspannung, mit der die Lamellen an dem Gurtband 1 anliegen, wird die Parallelität der Abstreifkante 14 jeder Lamelle 6 mit dem Gurtband 1 eingestellt. Diese Einstellung ist für die wirksame Reinigung des Gurtbandes 1 extrem wichtig. Bei einer Neueinstellung dient dabei das gegebenenfalls durch den klaffenden Schlitz fallende Licht zwischen der Abstreifkante und dem Gurtband zur Korrektur 1, wobei die Einstellung solange korrigiert wird, bis die Abstreifkante 14 überall an dem Gurtband 1 satt anliegt. Zu dieser Einstellung wird die kleine Schlinge 12 der Doppelschelle 11 gelöst und die aus dem Element und dem Elementenhalter 10 gebildete Einheit solange verschwenkt, bis der genannte Zustand zwischen der Abstreifkante und dem Gurtband 1 erreicht ist. Danach wird die kleine Schlinge festgezogen; an dieser Stelle wird auch eine Nachstellung vorgenommen, sollte sich die Lamelle verschlissen haben oder durch eine Verhakung mit dem Gurtband 1 verstellt haben.

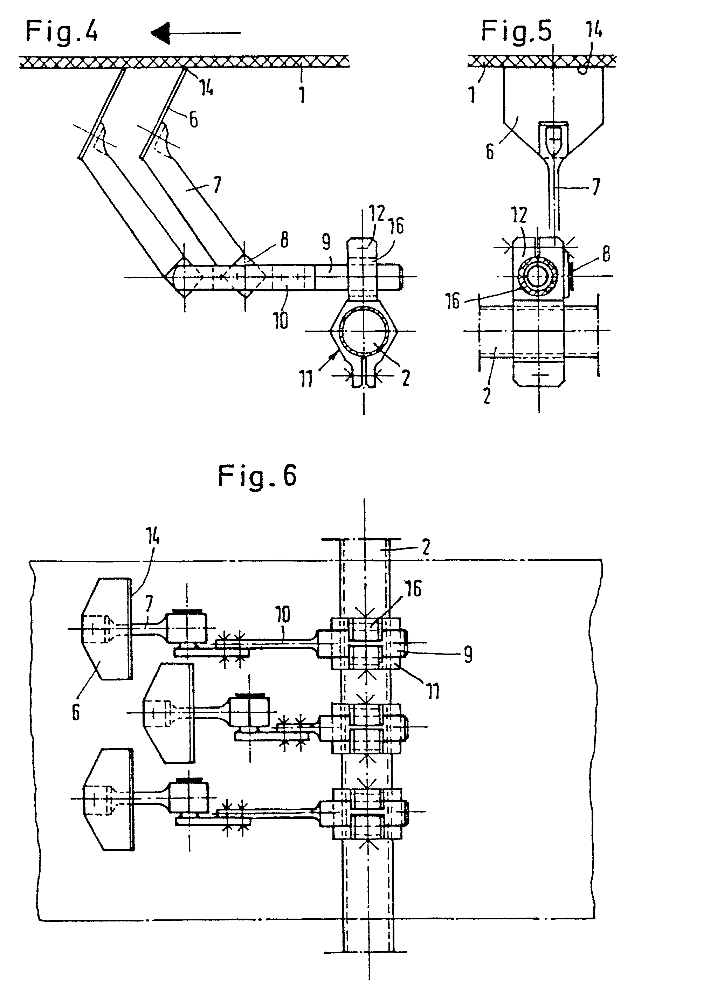

In Weiterbildung der Erfindung ist vorgesehen, dass die letztgenannte Einstellung bezüglich der Parallelität der Abstreifkante 14 zu der Gurtband-Unterseite in gewissem Grade selbsttätig erfolgt. Dazu ist an der Klemmverbindung zwischen dem zylindrischen Stab 9 des Elementenhalters 10 und der kleinen Schlinge 12 an der Doppelschelle 11 eine sogenannte Silent-Buchse bzw. Torsionsfeder 16 eingefügt, die eine selbstzentrierende Wirkung hat, jedoch eine gewisse Winkelauslenkung um die Mittelachse des zylindrischen Stabes 9 gestattet, also um eine Achse, die in Richtung der Gurtbandaufrichtung unter oder oberhalb der Traverse 2 verläuft (Fig. 4–6).

Für den Fall, dass die Einstellung einer Lamelle 6 nicht exakt parallel zur Unterseite des Gurtbandes 1 ausgerichtet worden ist bzw. für den Fall, dass sich die Lamelle 6 verstellt hat oder das Gurtband 1 vorübergehend oder dauernd in einer anderen Winkellage zu jeder Lamelle 6 läuft, bewirkt die einseitige Belastung auf die eine Seite der Abstreifkante 14 ein Schwenkmoment um die Mittelachse des zylindrischen Stabes 9 gegen die Wirkung der Torsionsfeder 16. Nach der selbsttätigen Einstellung einer neuen Gleichgewichtslage ist die Abstreifkante 14 wieder annähernd oder vollständig parallel zur Unterseite des Gurtbandes 1 ausgerichtet, wobei das Richtmoment unter anderem von der Grösse der Vorspannung abhängt, mit der die Lamellen an der Unterseite des Gurtbandes 1 anliegen.

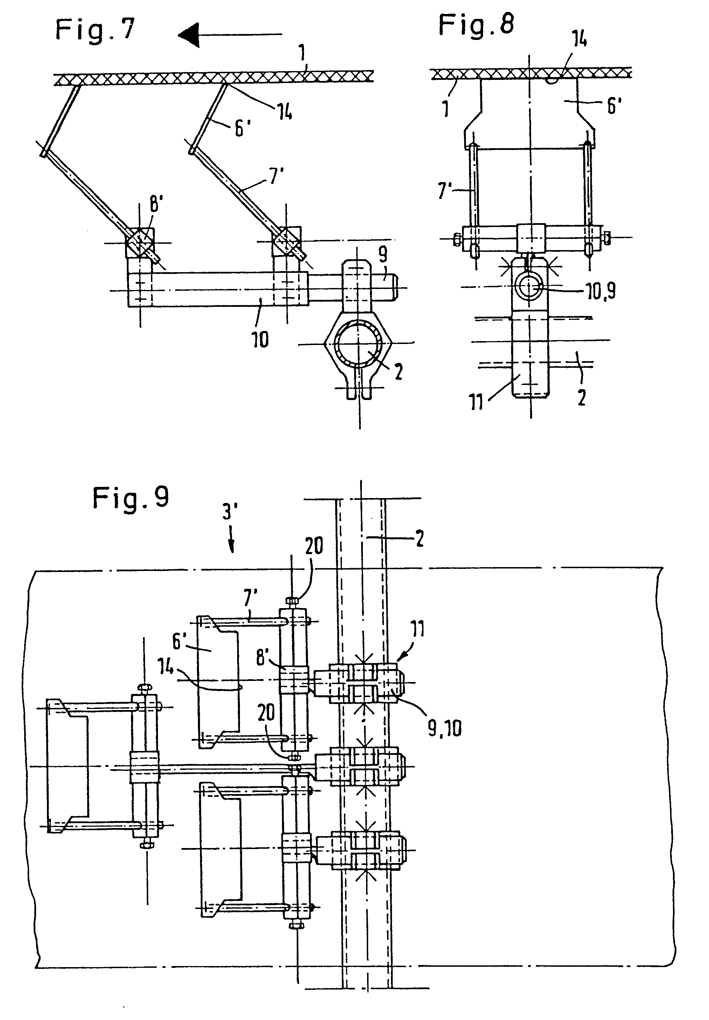

In den Fig. 7–9 ist ein weiteres Ausführungsbeispiel der Erfindung dargestellt. Hierbei ist jede Lamelle 6′ durch zwei Stützen 7′ gehalten, die im Abstand zueinander angeordnet sind. Jede Stütze 7′ ist mit Hilfe einer Klemmverbindung mit dem Federgelenk 8′ verbunden, wobei die eigentliche Feststellung mit Hilfe einer Klemmschraube 20 erfolgt. Ausserdem ist bei diesem Ausführungsbeispiel die Abstreifkante 14 schmaler gewählt als der Abstand zweier Stützen 7′ ein und desselben Elementes 3′. Dadurch rieselt das von der Gurtband-Unterseite abgekratzte Gut nicht auf die Stützen 7′, so dass sich hier kein Aufbau von Kratzgut bilden kann. Insgesamt bleibt die Vorrichtung bei dieser Ausgestaltung also sauberer.

Es ist ersichtlich, dass die Vorspannung der Lamellen 6′ gegen die Unterseite des Gurtbandes 1 sowohl an der Klemmverbindung mit Hilfe der Klemmschraube 20 als auch durch Verschwenken des gesamten Elementenhalters 10 um die Traverse 2 erfolgen kann. Neben den genannten Vorteilen wird durch diese Anordnung das Auswechseln einer Lamelle 6′ mit den daran in der Regel unlösbar befestigten Stützen 7′ erleichtert.

Die Traverse 2 wird normalerweise durch vertikal an dem Gurtband-Chassis angebrachten Spindel gehalten und verstellt, oder es ist eine schwimmende Lagerung der Traverse 2 vorgesehen, beispielsweise an Parallel-Lenkern, die federbelastet oder gewichtsbelastet sind. Insgesamt ist die erfindungsgemässe Vorrichtung vorzugsweise unmittelbar hinter der Umlenkrolle des Gurtbandes 1 angebracht, jedoch noch vor einer Spannrolle, die sich häufig in der Nähe der äussersten Umlenkrolle befindet. In diesem Bereich läuft das Gurtband 1 mit den geringsten Schwingungen, so dass die erfindungsgemässe Abstreifvorrichtung hier besonders wirkungsvoll ist.

Bei den vorangehend geschilderten Ausführungsbeispielen ist die Traverse 2 jeweils unterhalb der Elementenhalter 10 angeordnet. Durch eine Umkehrung der Doppelschelle 11 mit der grossen Schlinge 13 oberhalb der kleinen Schlinge 12 kann die Traverse 2 auch näher an dem Gurtband 1 bei im übrigen gleicher Vorrichtung angebracht sein, was immer dann empfehlenswert ist, wenn die Platzverhältnisse beengt sind.

**Patentansprüche**

1. Abstreifvorrichtung für Gurtbänder, mit mehreren, jeweils eine Lamelle, mindestens eine Stütze sowie ein Federgelenk beinhaltenden Elementen, die an einer quer zum Gurtband verlaufenden Traverse mit Hilfe eines Elementenhalters befestigt sind, dadurch gekennzeichnet, dass die Befestigung des Elementenhalters (10) an der Traverse (2) durch eine lösbare Klemmverbindung erfolgt, die eine stufenlose Einstellung um eine Achse zulässt, die in Gurtbandlängsrichtung verläuft.

2. Abstreifvorrichtung nach Anspruch 1, dadurch gekennzeichnet, dass die Befestigung aus einer der Traverse (2) zugeordneten Schelle (11) und einem dem Elementenhalter (10) zugeordneten zylindrischen Stab (9) besteht.

3. Abstreifvorrichtung nach Anspruch 2, dadurch gekennzeichnet, dass die Schelle Bestandteil einer Doppelschelle (11) ist, deren zusätzliche Schlinge (13) die als zylindrisches Rohr ausgebildete Traverse (2) umfasst.

4. Abstreifvorrichtung nach einem der Ansprüche 1–3, dadurch gekennzeichnet, dass der Elementenhalter (10) aus der eingestellten Klemmposition gegen eine Zentrierfederwirkung um einen geringen Winkelbetrag um die Achse hin- und herschwenkbar ist.

5. Abstreifvorrichtung nach Anspruch 4, dadurch gekennzeichnet, dass als Zentrierfeder eine Torsionsfeder (16) mit einer äusseren und einer inneren Hülse und einer dazwischen angeordneten Gummischicht vorgesehen ist, und dass die eine Hülse der Traverse (2) und die andere Hülse dem Elementenhalter (10) zugeordnet ist.

6. Abstreifvorrichtung nach Anspruch 2 und 5, dadurch gekennzeichnet, dass die Gummitorsionsfeder (16) zwischen dem zylindrischen Stab (9) und der Schelle (11) eingespannt ist.

7. Abstreifvorrichtung nach einem der vorhergehenden Ansprüche, dadurch gekennzeichnet, dass die Stützen (7') für die Lamelle (6') an den Federgelenken (8) durch eine Klemmverbindung befestigt sind und entlang ihrer Längsachse stufenlos einstellbar sind.

8. Abstreifvorrichtung nach Anspruch 7, dadurch gekennzeichnet, dass für jede Lamelle (6') zwei Stützen (7') an beiden Seiten angeordnet sind.

9. Abstreifvorrichtung nach Anspruch 8, dadurch gekennzeichnet, dass die Abstreifkante (14) jeder Lamelle (6') schmaler ist als der Abstand der beiden Stützen (7') einer Lamelle (6').

10. Abstreifvorrichtung nach einem der vorhergehenden Ansprüche, dadurch gekennzeichnet, dass zwischen dem auf die Unterseite des Gurtbandes (1) von der Drehachse des Federgelenkes (8) gefällten Lots und der Verbindung von der Drehachse zu der Abstreifkante (14) ein Winkel von ca. 5–45° vorhanden ist, der insbesondere 20° beträgt.

**Claims**

1. A scraper device for belts, having a plurality of elements including a blade, at least one support and a spring joint, which elements are secured by means of a element fixture to a traverse extending transversely relative to the belt, characterised in that the fastening of the element fixture (10) to the traverse (2) is effected by means of a detachable clamping connection, which allows for a variable adjustment about an axis extending in the longitudinal direction of the belt.

2. A scraper device according to claim 1, characterised in that the fastening comprises a clamp (11) associated with the traverse (2), and a cylindrical rod (9) associated with the element fixture (10).

3. A scraper device according to claim 2, characterised in that the clamp is a component part of a double-sided clamp (11), the additional loop (13) of which surrounds the traverse (2), which is formed as a cylindrical tube.

4. A scraper device according to any one of claims 1 to 3, characterised in that the element fixture (10) may be pivoted backward and forward through a small angle about the axis and against the effect of a centering spring, out of the set clamping position.

5. A scraper device according to claim 4, characterised in that a torsion spring (16), having an outer and an inner sleeve and an interposed rubber layer, is provided as a centering spring, one sleeve being associated with the traverse and the other sleeve being associated with the element fixture (10).

6. A scraper device according to claims 2 and 5, characterised in that the rubber torsion spring (16) is tensioned between the cylindrical rod (9) and the clamp (11).

7. A scraper device according to any one of the preceding claims, characterised in that the supports (7') for the blade (6') are secured to the spring joints (8) by means of a clamping connection and may be variably adjusted along their longitudinal axis.

8. A scraper device according to claim 7, characterised in that, for each blade (6'), two supports (7') are arranged on either side.

9. A scraper device according to claim 8, characterised in that the scraping edge (14) of each blade (6') is narrower than the distance between the two supports (7') of a blade (6').

10. A scraper device according to any one of the preceding claims, characterised in that there is an angle of approximately 5–45°, more particularly 20°, between the perpendicular dropped from the pivot axis of the spring joint (8) onto the underside of the belt (1) and the connecting line from the pivot axis to the scraping edge (14).

**Revendications**

1. Dispositif de raclage pour courroies de transport constitué par plusieurs éléments comprenant chacun une lamelle, au moins un support ainsi qu'un joint à ressort, fixés à une traverse placée transversalement par rapport à la courroie à l'aide d'un support d'éléments, caractérisé en ce que la fixation du support d'éléments (10) sur la traverse (2) est réalisée au moyen d'une jonction par serrage pouvant être desserrée qui permet un réglage continu autour d'un axe qui est placé dans le sens longitudinal de la courroie.

2. Dispositif de raclage selon la revendication 1, caractérisé en ce que la fixation est constituée par une bride de fixation (11) correspondant à la traverse (2) et par une barre cylindrique (9) correspondant au support d'éléments (10).

3. Dispositif de raclage selon la revendication 2, caractérisé en ce que la bride de fixation est un élément d'une double bride de fixation (11) dont la boucle supplémentaire (13) entoure la traverse (2) formée comme un tuyau cylindrique.

4. Dispositif de raclage selon l'une des revendications 1 à 3, caractérisé en ce que le support d'éléments (10) peut osciller autour de l'axe d'une petite valeur angulaire à partir de la position de serrage réglée à l'encontre de l'action d'un ressort de centrage.

5. Dispositif de raclage selon la revendication 4, caractérisé en ce qu'un ressort à torsion (16) avec une gaine extérieure, une gaine intérieure et une couche de caoutchouc placée entre deux est prévu comme ressort de centrage et que l'une des gaines correspond à la traverse (2) et l'autre au support d'éléments (10).

6. Dispositif de raclage selon les revendications 2 et 5, caractérisé en ce que le ressort à torsion en caoutchouc (16) est tendu entre la barre cylindrique (9) et la bride de fixation (11).

7. Dispositif de raclage selon l'une des revendications précédentes, caractérisé en ce que les supports (7′) de la lamelle (6′) sont fixés aux jonctions par ressort (8) par une jonction par serrage et qu'ils sont réglables en continu le long de leur axe longitudinal.

8. Dispositif de raclage selon la revendication 7, caractérisé en ce que deux supports (7′) sont placés des deux côtés de chaque lamelle (6′).

9. Dispositif de raclage selon la revendication 8, caractérisé en ce que l'arête de raclage (14) de chaque lamelle (6′) est plus étroite que l'écart entre les deux supports (7′) d'une lamelle (6′).

10. Dispositif de raclage selon l'une des revendications précédentes, caractérisé en ce qu'il y a un angle de 5 à 45° environ entre la perpendiculaire abaissée sur la face inférieure de la courroie (1) à partir de l'axe de rotation du joint à ressort (8) et la jonction de l'axe de rotation à l'arête de raclage (14) et que cet angle est en particulier de 20°.

Fig.1

Fig.2

Fig.3

Fig.4

Fig.5

Fig.6

# Fig.7

# Fig.8

# Fig.9